# EUROPEAN PATENT APPLICATION

(11) **EP 4 280 699 A1**
(43) Date of publication of application: **22.11.2023**
(21) Application number: 22784826.4
(22) Date of filing: 24.03.2022
(51) Int. Cl.: H04W 48/18, H04W 48/02, H04W 60/00, H04W 76/12, H04W 80/10, H04W 88/18

(54) **APPARATUS AND METHOD FOR NETWORK SLICE CONTROL IN COMMUNICATION SYSTEM**

(30) Priority: 06.04.2021 KR 20210044599
(71) Applicant: Samsung Electronics Co., Ltd., Suwon-si, Gyeonggi-do 16677 (KR)
(72) Inventor: KUMAR, Sunil, Suwon-si Gyeonggi-do 16677 (KR); LEE, Shijae, Suwon-si Gyeonggi-do 16677 (KR)
(74) Representative: HGF
(86) International application number: PCT/KR2022/004175
(87) International publication number: WO 2022/215916

(57) **Abstract**

The present disclosure relates to 5th generation (5G) or a pre-5G communication system for supporting higher data transmission rates than 4th generation (4G) communication system such as long term evolution (LTE). The present disclosure relates to a method performed by a network device in a communication system, and may comprise the steps of: receiving an access request message of a terminal for a network slice from an access and mobility management function (AMF); obtaining, from a unified data repository (UDR), an external network identifier of the terminal; receiving, from an external network server, information on whether to allow the terminal access to the network slice on the basis of the external network identifier of the terminal; and transmitting an access control response message to the AMF.

## Description

### [Technical Field]

The disclosure relates generally to a communication system and, more particularly, to an apparatus and a method for controlling a network slice in a communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G.

In the initial stage of 5G mobile communication technologies, in order to support services and to satisfy performance requirements in connection with enhanced Mobile BroadBand, (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there is ongoing discussion regarding improvement and performance enhancement of initial 5G mobile communication technologies in view of services to be supported by 5G mobile communication technologies, and there has been physical layer standardization regarding technologies such as V2X for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is impossible, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR, VR, and the like (XR = AR + VR + MR), 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Several logically separated networks may be provided through network slicing. A service provider may provide a dedicated network specialized for each of various services through networks having different characteristics. At this time, the service provider needs to control and monitor several logically separated networks.

### [Disclosure of Invention]

### [Technical Problem]

Based on the above discussion, the disclosure provides an apparatus and a method for interlocking network functions (NFs) of a core network with an external network server in a communication system.

In addition, the disclosure provides an apparatus and a method for storing and managing information of a network slice instance produced in a communication system.

In addition, the disclosure provides an apparatus and a method for controlling access of a terminal to a network slice by interworking with an external network server in a communication system.

In addition, the disclosure provides an apparatus and a method for controlling establishment of a protocol data unit (PDU) session for a network slice by interworking with an external network server in a communication system.

In addition, the disclosure provides an apparatus and a method for controlling change of a policy for a terminal by interworking with an external network server in a communication system.

In addition, the disclosure provides an apparatus and a method for monitoring information about usage of a network slice in a communication system.

### [Solution to Problem]

A method performed by a network device in a communication system according to an embodiment of the disclosure may include receiving an access request message of a terminal to a network slice from an access and mobility management function (AMF), obtaining an external network identifier of the terminal from a unified data repository (UDR), receiving information about whether or not to allow the terminal to access the network slice from an external network server, based on the external network identifier of the terminal, and transmitting an access control response message to the AMF.

A network device in a communication system according to an embodiment of the disclosure may include at least one transceiver and at least one processor operatively connected to the at least one transceiver, wherein the at least one processor may be configured to receive an access request message of a terminal to a network slice from an access and mobility management function (AMF), obtain an external network identifier of the terminal from a unified data repository (UDR), receive information about whether or not to allow the terminal to access the network slice from an external network server, based on the external network identifier of the terminal, and transmit an access control response message to the AMF.

### [Advantageous Effects of Invention]

An apparatus and a method according to various embodiments of the disclosure may optimize a network by interlocking network functions (NFs) of a core network with an external network server.

In addition, an apparatus and a method according to various embodiments of the disclosure may store and manage information of a network slice instance.

In addition, an apparatus and a method according to various embodiments of the disclosure may control access of a terminal to a network slice.

In addition, an apparatus and a method according to various embodiments of the disclosure may control establishment of a protocol data unit (PDU) session for a network slice.

In addition, an apparatus and a method according to various embodiments of the disclosure may control policies for terminals connected to a network slice.

In addition, an apparatus and a method according to various embodiments of the disclosure may monitor information about usage of a network slice.

Advantageous effects obtainable from the disclosure may not be limited to the above mentioned effects, and other effects which are not mentioned may be clearly understood, through the following descriptions, by those skilled in the art to which the disclosure pertains.

### [Brief Description of Drawings]

FIG. 1 illustrates a network structure according to various embodiments of the disclosure.
FIG. 2 illustrates a network structure according to various embodiments of the disclosure.
FIG. 3 illustrates a functional configuration of a slice management and control function (SMCF) according to various embodiments of the disclosure.
FIG. 4 illustrates a procedure for network slice instantiation according to an embodiment of the disclosure.
FIG. 5 illustrates a procedure for registering a terminal in a network slice according to an embodiment of the disclosure.
FIG. 6 illustrates a procedure for establishing a protocol data unit (PDU) session according to an embodiment of the disclosure.
FIG. 7 illustrates a procedure for controlling a network slice policy according to an embodiment of the disclosure.
FIG. 8 illustrates a procedure for monitoring network slice usage according to an embodiment of the disclosure.
FIG. 9 illustrates a configuration of a network device according to various embodiments of the disclosure.

### [Best Mode for Carrying out the Invention]

The terms used in the disclosure are only used to describe specific embodiments, and are not intended to limit the disclosure. A singular expression may include a plural expression unless they are definitely different in a context. Unless defined otherwise, all terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

In the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

In the disclosure, various embodiments will be described using terms employed in some communication standards (e.g., long term evolution (LTE) and new radio (NR) defined by the 3rd generation partnership project (3GPP)), but they are only for the sake of illustration. The embodiments of the disclosure may also be easily applied to other communication systems through modifications.

In the disclosure, terms referring to message (e.g., Nsmcf_slice access control_registration request) are illustratively used for the sake of descriptive convenience. Therefore, the disclosure is not limited by the terms as used below, and other terms referring to subjects having equivalent technical meanings may be used.

The 5th generation (5G) communication system must be able to provide various service level agreements (SLAs) (e.g., data rates, services provided, use cases, and support for various types of terminals). To this end, it is not efficient in terms of scalability, construction cost, operational complexity, and the like for a communication network operator to separately build networks that satisfy the respective SLAs. Therefore, there is a need to build virtualized networks capable of satisfying various SLAs by logically separating a physical network.

Network slicing is a network architecture that enables multiplexing of virtualized independent logical networks on the same physical network infrastructure. Here, the virtualized independent logical network is referred to as a network slice. That is, a network slice is a logical network that provides specific network functions and network characteristics. The network slice may include one or more network slice instances. The network slice instance may indicate a set of network function instances and necessary resources (e.g., compute resources, storage resources, and networking resources). By applying network slicing, one communication network may be divided into separate independent logical networks according to service types, terminals, quality of service (QoS), and various other attributes. That is, since network slices are allocated virtualized separate network resources, efficient operation of network resources, network stability and security, and independent management are possible. The network slice may be connected to a data network (DN) depending on policies, service features, and the like. One or more data networks may be connected to one network slice, and one or more network slices may be connected to one data network.

Hereinafter, the disclosure relates to a method and an apparatus for controlling and monitoring a network slice in a communication system. Specifically, a description will be made to a technique for a service provider to monitor and control a logical network (i.e., a network slice) in an environment in which a network operator provides a logical network divided as a network slice to a service provider (e.g., a mobile virtual network operator (MVNO) or a media content operator).

### [Mode for Carrying out the Invention]

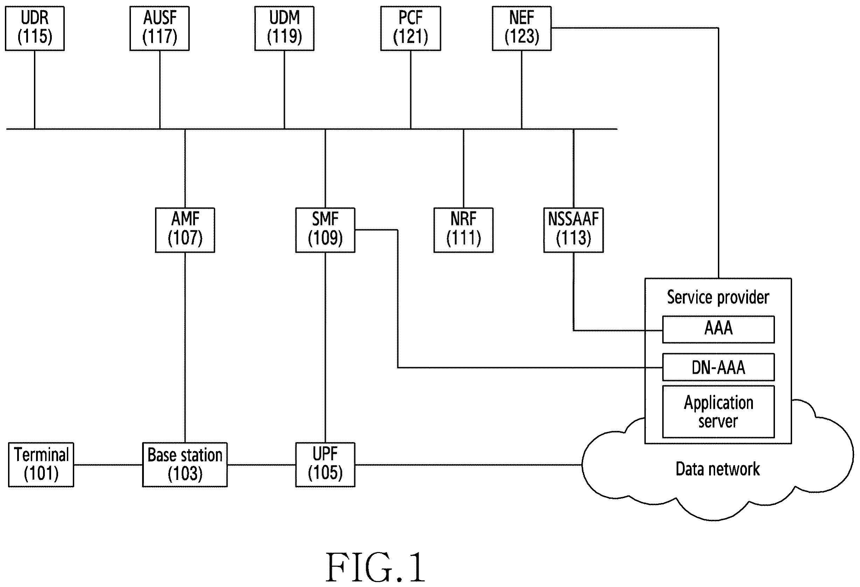

FIG. 1 illustrates a network structure according to various embodiments of the disclosure. FIG. 1 illustrates a terminal 101, a base station 103, and, as some of functions of the 5th generation core (5GC) network, a user plane function (UPF) 105, an access and mobility management function (AMF) 109, a session management function (SMF) 109, a network function repository function (NRF) 111, a network slice-specific authentication and authorization function (NSSAAF) 113, a unified data repository (UDR) 115, an authentication server function (AUSF) 117, a unified data management (UDM) 119, a policy control function (PCF) 121, and a network exposure function (NEF) 123.

The terminal 101 may access a data network through the base station 103 and the UPF 105. In order to transmit and receive data through the UPF 105, the terminal must establish a protocol data unit (PDU) session, and one PDU session may include one or more quality-of-service (QoS) flows. Terminal 101 may be referred to as "terminal", "mobile station", "subscriber station", "remote terminal", "wireless terminal", "user device", or other terms having a technical meaning equivalent thereto.

The base station 103 is a radio access network (RAN) node and is a network infrastructure that provides wireless access. The base station 103 may have coverage defined as a certain geographical area based on a distance over which signals may be transmitted. The base station 103 may cover one cell or multiple cells. Here, the multiple cells may be distinguished by supported frequencies and covered sector areas.

The UPF 105 may provide functions of transmitting and routing user plane packets between the base station 103 and the data network. The AMF 107 may provide functions for registration management, reachability management, connection management, and mobility management. The SMF 109 may provide functions for PDU session management, Internet protocol (IP) address allocation, and GTP-U tunnel management. The NRF 111 may provide a function of managing network functions (NFs). The NSSAAF 113 may provide functions for authentication and authorization of network slices. The UDR 115 may provide a function of storing data belonging to the UDM 119, the PCF 121, and the NEF 123. The AUSF 117 may provide functions for authentication of subscribers and networks. The UDM 119 may provide a function of storing and managing subscription information of the terminal 101. The PCF 121 may provide a function of managing policies related to session management and policies related to mobility management. The NEF 123 may provide a function of providing information about network functions in the 5G system to an external network function.

The 5GC may be configured based on service based architecture (SBA). The SBA may have a structure in which network elements are replaced with network functions. In the SBA, respective network functions may provide services to other network functions. In the SBA, all network functions may be interconnected through a common bus. An interface that connects network functions to a common bus may be referred to as a service based interface (SBI). For example, an SBI connecting the UDR 115 and the common bus may be referred to as Nudr. For example, an SBI connecting the NSSAAF 113 and the common bus may be referred to as Nssaaf. Services may be provided or consumed using the SBI.

The following two mechanisms may be defined for service use of slices or external data networks in 5G networks.

First, a network slice-specific authentication and authorization procedure may be defined. The network slice-specific authentication and authorization procedure may be triggered by the AMF 107 during a registration procedure. The AMF 107 may determine that the network slice-specific authentication and authorization procedure is required for single-NSSAI (S-NSSAI) of currently allowed network slice selection assistance information (NSSAI). In addition, the AMF 107 may trigger the network slice-specific authentication and authorization procedure when authentication, authorization and accounting (AAA) that authenticates the network slice triggers re-authentication. The NSSAF 113 may cause an extensible authentication protocol (EAP) message exchange process to be performed between the terminal 101 and the AMF 107 and the AAA, thereby supporting the network slice-specific authentication and authorization procedure for the terminal 101 to be completed.

Second, a PDU session establishment authentication and authorization procedure may be defined. The PDU session establishment authentication and authorization procedure may be selectively triggered by the SMF 109 during establishment of the PDU session. The PDU session establishment authentication and authorization procedure may be performed between the SMF 109 and a data network AAA (DN-AAA) through the UPF 105. If the DN-AAA exists in the 5G core (5GC), the PDU session establishment authentication and authorization procedure may be performed directly between the SMF 109 and the DN-AAA without passing through the UPF 105.

Both of the above mechanisms define that authentication and authorization procedures are performed through a method in which entities of the 5G core network enable interworking between the terminal and the AAA, assuming that the AAA (or DN-AAA) exists. However, since not many service providers have the AAA, the above two mechanisms cannot be applied to all service providers. In addition, since the above two mechanisms define only the authentication and authorization procedure and the DN-AAA-based DN-level authentication and authorization procedure among the AAA-based registration procedures, it may be difficult to use them as commercial services. Accordingly, it is necessary to define policy control and monitoring in units of slices so as to enable improved services and efficient network operation.

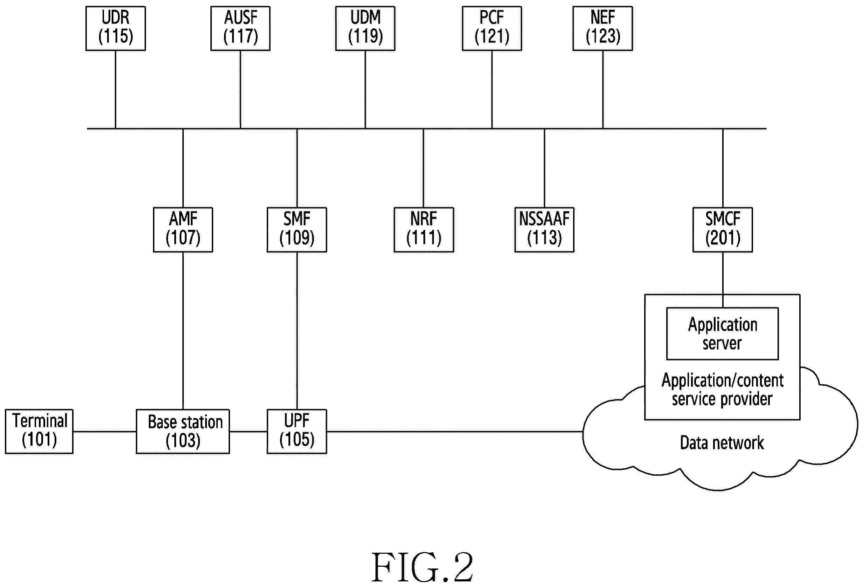

FIG. 2 illustrates a network structure according to various embodiments of the disclosure. A slice management and control function (SMCF) 201, which is a network function (NF) defined for network slice access control and monitoring, will be described with reference to FIG. 2.

The SMCF 201 may be interconnected with other network functions of a 5th generation core (5GC) network through a common bus. A service-based interface (SBI) connecting the SMCF 201 to the common bus may be referred to as Nsmcf. The SMCF 201 may interwork with interconnected 5GC network functions to perform functions related to at least one of terminal registration (user equipment (UE) registration), network slice instantiation, protocol data unit (PDU) session establishment, slice policy control, or slice usage monitoring. In addition, the SMCF 201 may provide a hypertext transfer protocol (HTTP)-based representational state transfer (REST) application programming interface (API) for interworking with service providers existing in a data network.

The SMCF 201 may perform functions related to network slice instantiation. The SMCF 201 may receive a slice information configuration message from a network slice manager (NSM). The slice configuration information message may include at least one piece of slice information or application information corresponding to the produced network slice instance (NSI). The slice information may include at least one of S-NSSAI or an NSI ID. The application information may include at least one of an application uniform resource identifier (URI) or an application fully qualified domain name (FQDN). The SMCF 201 may store received slice information and application information. The SMCF 201 may transmit a slice information configuration response message to the NSM.

The SMCF 201 may perform functions related to terminal registration. The SMCF 201 may receive at least one of a terminal identifier (e.g., a subscription permanent identifier (SUPI) or a network slice identifier (e.g., single-network slice selection assistance information (S-NSSAI))) from a network function (e.g., AMF). The SMCF 201 may obtain at least one of a public identifier (e.g., a generic public subscription identifier (GPSI) or a mobile station international subscriber directory number (MSISDN)), an application ID, and an application URI from a network function (e.g., UDR). The public identifier may be an identifier of a terminal for an external network corresponding to the terminal identifier. The SMCF 201 may store mapping information between terminal identifiers and public identifiers. The SMCF 201 may transmit a public identifier and a network slice identifier to a service provider. The public identifiers and network slice identifiers may be used by service providers to determine whether or not to allow registration of terminals in slices. The SMCF 201 may receive at least one of a public identifier, a network slice identifier, or authorization result information from a service provider. The SMCF 201 may identify a terminal identifier corresponding to the public identifier, based on the mapping information. The SMCF 201 may transmit at least one of a terminal identifier, a network slice identifier, or authorization result information to a network function (e.g., AMF). A terminal registration procedure may be triggered based on the authorization result information.

The SMCF 201 may perform functions related to establishment of a protocol data unit (PDU) session. The SMCF 201 may receive at least one of a terminal identifier (e.g., SUPI) or a network slice identifier (e.g., S-NSSAI) from a network function (e.g., SMF). The SMCF 201 may obtain at least one of a public identifier (e.g., GPSI, MSISDN), an application ID, and an application URIfrom a network function (e.g., UDR). The public identifier may be an identifier of a terminal for an external network corresponding to the terminal identifier. The SMCF 201 may store mapping information between terminal identifiers and public identifiers. The SMCF 201 may transmit a public identifier and a network slice identifier to a service provider. The public identifier and the network slice identifier may be used by the service provider to determine whether or not allow PDU session establishment in slices. The SMCF 201 may receive at least one of a public identifier, a network slice identifier, or authorization result information from the service provider. The SCMF 201 may identify a terminal identifier corresponding to the public identifier, based on the mapping information. The SMCF 201 may transmit at least one of a terminal identifier, a network slice identifier, or authorization result information to a network function (e.g., SMF). The PDU session establishment procedure may be triggered based on the authorization result information.

The SMCF 201 may perform functions related to slice policy control. The SMCF 201 may receive at least one of a public identifier (e.g., GPSI or MSISDN), an identifier (e.g., a wildcarded identity (ID)) for identifying terminals using the service, a network slice identifier (e.g., S-NSSAI), an application ID, or a policy parameter from a service provider. The SMCF 201 may identify a terminal identifier of a terminal to perform policy control, based on mapping information or a wild card ID. The SMCF 201 may perform network functions and policy control. The SMCF 201 may receive at least one of a terminal identifier, a network slice identifier, an application ID, or a policy control result from the PCF. The SMCF 201 may identify a public identifier corresponding to the terminal identifier, based on the mapping information. The SMCF 201 may transmit at least one of a public identifier, a network slice identifier, or a policy control result to the service provider.

The SMCF 201 may perform functions related to slice usage monitoring. The SMCF 201 may transmit information related to network slice usage to a network slice manger (NSM). Information related to network slice usage may include at least one of the number of terminals connected to the network slice, the number of protocol data unit (PDU) sessions established in the network slice, or information about a policy applied to the network slice. If terminals are allowed to access the network slice, the SMCF 201 may update the number of terminals connected to the network slice. If establishment of PDU sessions for the network slice is allowed, the SMCF 201 may update the number of PDU sessions established in the network slice. If the policy applied to the network slice is changed, the SMCF 201 may update the policy applied to the network slice. The SMCF 201 may periodically transmit information related to network slice usage to the NSM. When receiving a specific message from a service provider, the SMCF 201 may transmit information related to network slice usage to the NSM.

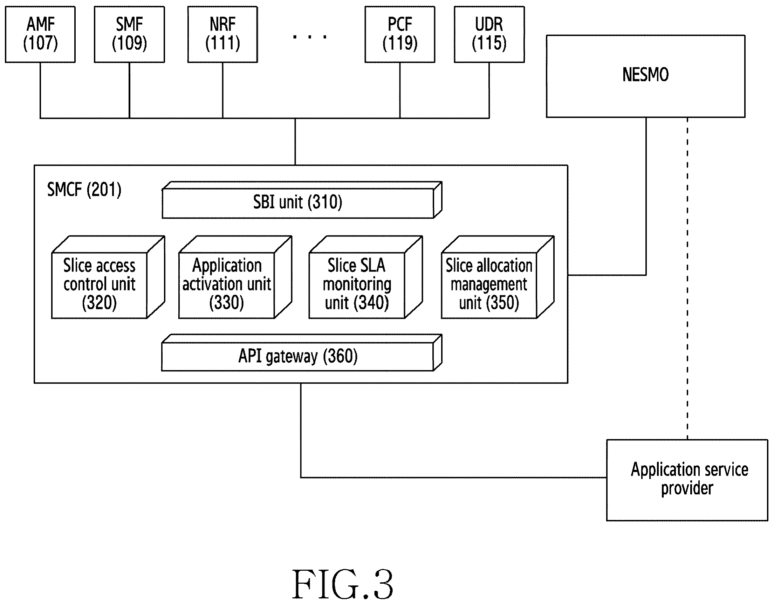

FIG. 3 illustrates a functional configuration of a slice management and control function (SMCF) according to various embodiments of the disclosure. Referring to FIG. 3, the SMCF may include a service-based interface (SBI) unit 310, a slice access control unit 320, an application activation unit 330, a slice service level agreement (SLA) monitoring unit 340, and a slice allocation management unit 350, and an application programming interface (API) gateway 360.

The SMCF may be comprised of an internal control block for providing functions and an interface block for external interworking. The internal control block may include the slice access control unit 320, the application activation unit 330, the slice SLA monitoring unit 340, and the slice allocation management unit 350. The slice access control unit 320 may perform a slice access control function. The application activation unit 330 may store and manage slice information for applications. In addition, the application activation unit 330 may map subscriber identity (ID) to an Internet service ID. The slice SLA monitoring unit 340 may manage and monitor the SLA of a slice. The slice allocation management unit 350 may perform access control and policy control according to quotas. The interface block may include the SBI unit 310 and the API gateway 360. The SBI unit 310 may perform interworking with network functions. The API gateway 360 may be used for interworking with a network slice management and orchestrator (NSMNO) and a service provider.

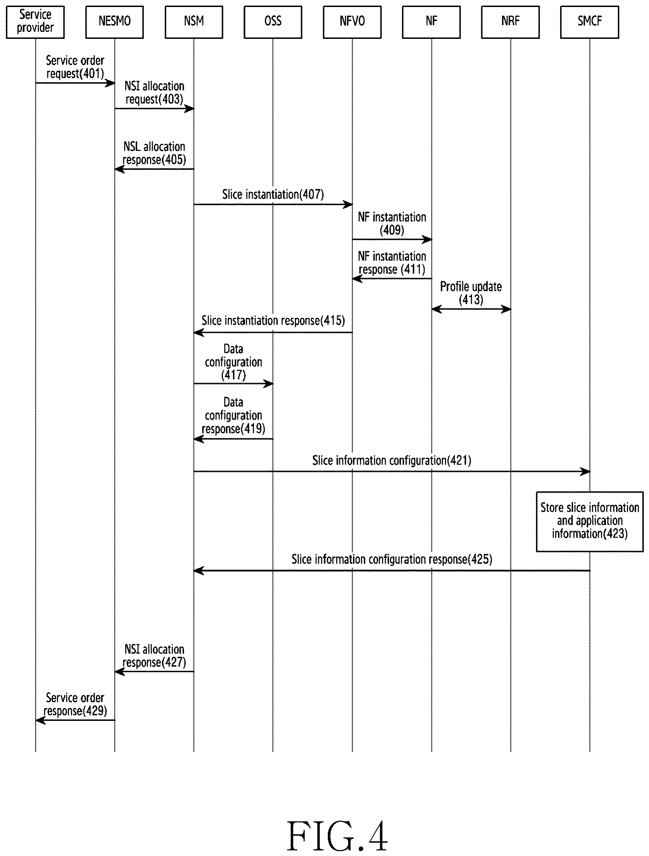

FIG. 4 illustrates a procedure for network slice instantiation according to an embodiment of the disclosure. A procedure for producing a network slice instance (NSI) in a network to which SMCF is applied will be described with reference to FIG. 4.

Referring to FIG. 4, a service provider may transmit a service order request message to a network slice management and orchestrator (NESMO) in operation 401. According to an embodiment, the service order request message may include requirements related to a network slice. Requirements related to a network slice may include at least one of bandwidth, latency, quality-of-service (QoS), or the number of users.

In operation 403, the network slice manager (NSM) may receive an NSI allocation request message from the NESMO. According to an embodiment, the NSI allocation request message may include requirements related to a network slice. The NSM may identify whether or not an existing NSI is used based on the requirements related to a network slice. For example, if an existing NSI corresponding to the requirements related to a network slice exists, the NSM may identify that the existing NSI is used. The NSM may determine whether or not produce a new NSI, based on the requirements related to a network slice. For example, the NSM may determine to produce a new NSI if there is no existing NSI corresponding to the requirements related to a network slice.

In operation 405, the NSM may transmit an NSI allocation response message to the NESMO. According to an embodiment, if an existing NSI is identified to be determined, the NSM may transmit an NSI allocation response message to the NESMO. The NSI allocation response message may include at least one of an NSI ID or single-network slice selection assistance information (S-NSSAI) corresponding to the existing NSI.

In operation 407, the NSM may transmit a slice instantiation message to a network function virtualization orchestrator (NFVO). According to an embodiment, if the NSM determines to produce a new NSI, the NSM may transmit a slice instantiation message to the NFVO. The slice instantiation message may include at least one of S-NSSAI or NSI ID corresponding to the new NSI.

According to an embodiment, the S-NSSAI may be used to identify a network slice. The S-NSSAI may include at least one of a slice/service type (SST) and a slice differentiator (SD). The SST may indicate a service type provided by a network slice. The SD may be used to distinguish network slices having the same SST value. For example, the SSTs may be configured as shown in Table 1 below.

**[Table 1]**

| SST | Service types |
|---|---|
| 1 | embb (enhanced mobile broadband) |
| 2 | URLLC (ultra reliable low latency communication) |
| 3 | mMTC (massive machine type communication) |
| 4 | V2X (vehicle to everything) |

According to an embodiment, the NSI ID may be used to identify a network slice instance. For example, the network slice may contain multiple instances. The NSI ID may be used to identify a specific instance from among the multiple instances included in the network slice.

In operation 409, the NFVO may transmit an NF instantiation message to a network function (NF). According to an embodiment, the NF instantiation message may include at least one of S-NSSAI or NSI ID corresponding to the new NSI.

In operation 411, the NFVO may receive an NF instantiation response message from the NF.

In operation 413, the NF may update the NRF and the profile. According to an embodiment, the NF may update the profile, based on at least one of the NRF, the NF ID, the S-NSSAI, or the NSI ID.

In operation 415, the NSM may receive a slice instantiation response message from the NFVO. According to an embodiment, the slice instantiation response message may include at least one of an NF ID, S-NSSAI, or an NSI ID.

In operation 417, the NSM may transmit a data configuration message to an operations support system (OSS). According to an embodiment, the data configuration message may include at least one of an NF ID, S-NSSAI, and an NSI ID. The OSS may configure NF data and initiate fault, configuration, alarms, performance, and security (FCAPS) operations.

In operation 419, the NSM may receive a data configuration response message from the OSS.

In operation 421, the NSM may transmit a slice information configuration message to the SMCF. According to an embodiment, the slice information configuration message may include at least one piece of slice information and application information. The slice information may include at least one of S-NSSAI, an NSI ID, the number of slice-specific allowed terminals, the number of slice-specific allowed sessions, or the number of terminal-specific allowed sessions. The application information may include at least one of an application uniform resource identifier (URI) or an application fully-qualified domain name (FQDN).

In operation 423, the SMCF may store slice information and application information.

In operation 425, the SMCF may transmit a slice information configuration response message to the NSM.

In operation 427, the NSM may transmit an NSI allocation response message to the NESMO. According to an embodiment, the NSI allocation response message may include at least one of S-NSSAI, an NSI ID, or an SMCF service URI.

In operation 429, the NESMO may transmit a service order response message to the service provider. According to an embodiment, the service order response message may include at least one of the S-NSSAI, the NSI ID, or the SMCF service URI.

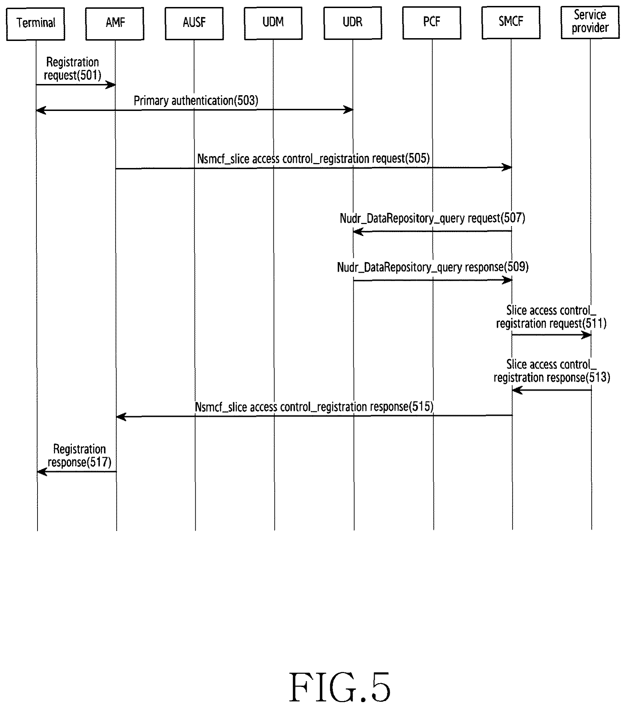

FIG. 5 illustrates a procedure for registering a terminal in a network slice according to an embodiment of the disclosure. A procedure in which the SMCF performs access control by interlocking network functions (NFs) of a 5th generation core (5GC) network with a server of a service provider in a network to which slice management and control function (SMCF) is applied will be described with reference to FIG. 5.

Referring to FIG. 5, in operation 501, a terminal may transmit a registration request message to an access and mobility management function (AMF). According to an embodiment, the registration request message may include requested single-network slice selection assistance information (S-NSSAI). The requested S-NSSAI may be a set of S-NSSAIs corresponding to network slices that the terminal wishes to access. The requested S-NSSAI may be one of default configured NSSAI, configured NSSAI, or allowed NSSAI. The configured NSSAI may indicate a set of general S-NSSAIs that may be used in the serving PLMN. The allowed NSSAI may indicate a set of S-NSSAIs allowed for the terminal.

In operation 503, the terminal may perform a primary authentication process with 5GC NFs (e.g., authentication server function (AUSF) or unified data management (UDM)). According to an embodiment, the primary authentication process may be a process of mutually identifying the network to which the terminal subscribes and the terminal subscribing to the network.

In operation 505, the SMCF may receive an Nsmcf_slice access control_registration request message from the AMF. According to an embodiment, the Nsmcf_slice access control_registration request message may include at least one of an SUPI or S-NSSAI. The SUPI may be used as a subscriber identifier. The SUPI may include at least one of an international mobile subscriber identity (IMSI) and a network access identifier (NAI). The SMCF may identify whether or not slice access control is required based on the S-NSSAI. The SMCF may identify whether or not the SUPI is allowed to be exposed to an external mobile network operator (MNO) domain. The SMCF may identify whether or not a generic public subscription identifier (GPSI) or a mobile station international subscriber directory number (MSISDN) is required. The GPSI or MSISDN may be used as a public identifier. That is, if the SUPI is not allowed be exposed to the external MNO domain, the SMCF may identify that the GPSI or MSISDN is required.

According to an embodiment, the SMCF may determine whether or not to allow a terminal to access a network slice in response to the received Nsmcf_slice access control_registration request message. The SMCF may determine whether or not to allow the terminal to access the network slice, based on the slice information received from the NSM. The slice information may be included in the slice information configuration message received by the SMCF from the NSM in the procedure for the network slice instantiation according to FIG. 4. The slice information may include at least one of S-NSSAI, an NSI ID, the number of slice-specific allowed terminals, the number of slice-specific allowed sessions, or the number of terminal-specific allowed sessions. For example, if the number of terminals connected to the network slice is less than the number of terminals allowed in the network slice, the SMCF may determine to allow the terminal to access the network slice. As another example, if the number of terminals connected to the network slice is greater than or equal to the number of terminals allowed in the network slice, the SMCF may determine not to allow the terminal to access the network slice. That is, the SMCF may determine whether or not to spontaneously/preemptively allow the terminal to access the network slice, based on information provisioned from the NSM. According to an embodiment, if it is determined to allow the terminal to access the network slice, the SMCF may perform operations 507 to 513. According to an embodiment, if it is determined not to allow the terminal to access the network slice, the SMCF may perform operation 515, instead of performing operations 507 to 513. In this case, authorization result information included in the Nsmcf_slice access control_registration response message may be information indicating that access of the terminal is not allowed (e.g., not allowed).

In operation 507, the SMCF may transmit a Nudr_DataRepository_query request message to the UDR. According to an embodiment, the Nudr _DataRepository_query request message may include at least one of an SUPI and S-NSSAI.

In operation 509, the SMCF may receive a Nudr_DataRepository_query response message from the UDR. According to an embodiment, the Nudr _DataRepository_query response message may include at least one of a GPSI, an MSISDN, an application ID, an application uniform resource identifier (URI), and mapping information of SUPIs and GPSIs (or MSISDNs). The SMCF may store the mapping information between SUPIs and GPSIs (or MSISDNs).

In operation 511, the SMCF may transmit a Slice access control_registration request message to the service provider. According to an embodiment, the Slice access control_registration request message may include at least one of a GPSI, an MSISDN, or S-NSSAI. According to an embodiment, the service provider may identify whether or not to allow a terminal to be registered in the slice. The service provider may identify whether or not to allow registration for the terminal, based on the terminal identifier (GPSI or MSISDN) and the S-NSSAI. The terminal may be identified based on the identifier (GPSI or MSISDN). The network slice may be identified based on the S-NSSAI.

In operation 513, the SMCF may receive a Slice access control_registration response message from the service provider. According to an embodiment, the Slice access control_registration response message may include at least one of the GPSI, the MSISDN, the S-NSSAI, or authorization result information. The authorization result information may be a result of whether or not to allow registration of the terminal determined by the service provider. According to an embodiment, the SMCF may identify an SUPI based on the GPSI (or MSISDN).

In operation 515, the SMCF may transmit an Nsmcf_slice access control_registration response message to the AMF. According to an embodiment, the Nsmcf_slice access control_registration response message may include at least one of the SUPI, the S-NSSAI, or the authorization result information. According to an embodiment, the AMF may identify whether or not to perform a registration procedure, based on the authorization result information.

In operation 517, the AMF may transmit a registration response message to the terminal. According to an embodiment, if registration of the terminal is not allowed, the AMF may include the authorization result information (e.g., request rejected) in the registration response message. According to an embodiment, if registration of the terminal is allowed, the AMF may include at least one of allowed S-NSSAI or a globally unique temporary identifier (GUTI) in the registration response message.

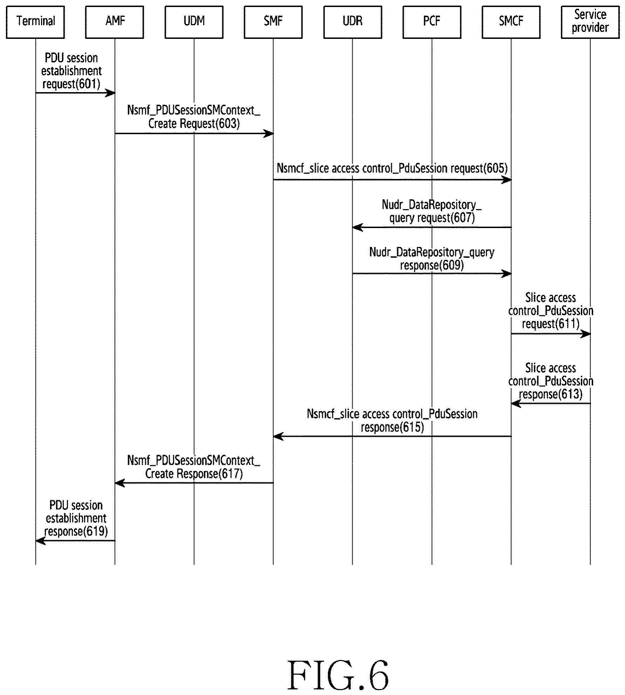

FIG. 6 illustrates a procedure for protocol data unit (PDU) session establishment according to an embodiment of the disclosure. A procedure for determining whether or not to allow session establishment for a terminal as part of a PDU session establishment procedure in a network to which the SMCF is applied will be described with reference to FIG. 6.

Referring to FIG. 6, in operation 601, the terminal may transmit a PDU session establishment request message to the AMF. According to an embodiment, the PDU session establishment request message may be included in an N1 session management container (N1 SM container). The PDU session establishment request message may be transmitted to the AMF through non-access stratum (NAS) signaling. The PDU session establishment request message may include at least one of single-network slice selection assistance information (S-NSSAI), a data network name (DNN), a subscription permanent identifier (SUPI), a PDU session identity (ID), a PDU session type, a session and service continuity (SSC) mode, 5th generation session management (5GSM) capability, protocol configuration options (PCOs), an SM PDU data network (DN) request container, the number of packet filters, header compression configuration, a user equipment (UE) integrity protection maximum data rate, or an always-on PDU session request.

According to an embodiment, the S-NSSAI may be used to identify a network slice. The S-NSSAI may include at least one of a slice/service type (SST) and a slice differentiator (SD). The SST may indicate a service type provided by the network slice. The SD may be used to distinguish network slices having the same SST value.

According to an embodiment, the DNN may indicate a data network in which a PDU session provides connectivity. The DNN may be used to identify at least one of a session management function (SMF) for a PDU session, a user plane function (UPF), an N6 interface, or a policy applied to the PDU session.

According to an embodiment, the SUPI may be used as a subscriber identifier in an internal network (e.g., 5th generation core (5GC) network). The SUPI may include at least one of an international mobile subscriber identity (IMSI) or a network access identifier (NAI).

In operation 603, the AMF may transmit an Nsmf_PDUSessionSMContext Create Request message to the SMF. According to an embodiment, the Nsmf_PDUSessionSMContext Create Request message may include at least one of S-NSSAI, a DNN (e.g., a UE requested DNN or selected DNN), an SUPI, a PDU session ID, an AMF ID, a request type, a policy control function (PCF) ID, priority access, small data rate control status, an N1 SM container, user location information, an access type, a radio access technology (RAT) type, a permanent equipment identifier (PEI), a generic public subscription identifier (GPSI), existence of a terminal in the local area data network (LADN) service area, subscription to PDU session status notification, a DNN selection mode, trace requirement, 5GS optimized display of a control plane cellular Internet-of-things (CIoT), or a control plane-only indicator. According to an embodiment, the SMF may identify whether or not authentication and authorization are required for a terminal to use a slice. Based on the received Nsmf_PDUSessionSMContext_Create Request message, the SMF may identify whether or not authentication and authorization are required for the terminal to use the slice.

In operation 605, the SMCF may receive an Nsmcf_slice access control_PduSession Request message from the SMF. According to an embodiment, the Nsmcf_slice access control_PduSession Request message may include at least one of the S-NSSAI, the DNN, and the SUPI. The SMCF may identify whether or not slice access control is required based on the S-NSSAI. The SMCF may identify whether or not the SUPI is allowed to be exposed to an external mobile network operator (MNO) domain. The SMCF may identify whether or not a generic public subscription identifier (GPSI) or a mobile station international subscriber directory number (MSISDN) is required. The GPSI or MSISDN may be used as a public identifier. That is, if the SUPI is not allowed to be exposed to the external MNO domain, the SMCF may identify that the GPSI or MSISDN is required.

According to an embodiment, the SMCF may determine whether or not to allow PDU session establishment in response to the received Nsmcf_slice access control _PduSession request message. The SMCF may determine whether or not to allow PDU session establishment, based on the received slice information. The slice information may be included in the slice information configuration message received by the SMCF from the NSM in the procedure for the network slice instantiation according to FIG. 4. The slice information may include at least one of S-NSSAI, an NSI ID, the number of slice-specific allowed terminals, the number of slice-specific allowed sessions, or the number of terminal-specific allowed sessions. For example, if the number of sessions established in the network slice is less than the number of sessions allowed in the network slice, the SMCF may determine to allow the establishment of a PDU session. As another example, if the number of sessions established for the terminal transmitting the PDU session establishment request message is less than the number of sessions allowed for the terminal, the SMCF may determine to allow the establishment of a PDU session. As another embodiment, if the number of sessions established in the network slice is less than the number of sessions allowed in the network slice, and if the number of sessions established for the terminal transmitting the PDU session establishment request message is less than the number of sessions allowed for the terminal, the SMCF may determine to allow the establishment of a PDU session. That is, the SMCF may determine whether or not to spontaneously/preemptively allow the establishment of a PDU session, based on information provisioned from the NSM. According to an embodiment, if it is determined to allow the PDU session establishment, the SMCF may perform operations 607 to 613. According to an embodiment, if it is determined not to allow the PDU session establishment, the SMCF may perform operation 615, instead of performing operations 607 to 613. In this case, authorization result information included in the Nsmcf_slice access control_PduSessionresponse message may be information indicating that the session establishment is not allowed (e.g., not allowed).

In operation 607, the SMCF may transmit a Nudr_DataRepository_query request message to a unified data repository (UDR). According to an embodiment, the Nudr _DataRepository_query request message may include at least one of the SUPI or the S-NSSAI.

In operation 609, the SMCF may receive a Nudr_DataRepository_query response message from the UDF. According to an embodiment, the Nudr_DataRepository_query response message may include at least one of a GPSI, an MSISDN, an application ID, an application uniform resource identifier (URI), and mapping information of SUPIs and GPSIs (or MSISDNs). The SMCF may store the mapping information between SUPIs and GPSIs (or MSISDNs).

Meanwhile, since there is a GPSI or MSISDN obtained during the UE registration procedure, operations 607 and 609 may be omitted depending on the SMCF capability.

In operation 611, the SMCF may transmit a Slice access control_PduSession Request message to the service provider. According to an embodiment, the Slice access control_PduSession Request message may include at least one of the GPSI, the MSISDN, and the S-NSSAI. According to an embodiment, the service provider may determine whether or not to allow a session establishment procedure for the terminal in a slice. The service provider may determine whether or not to allow session establishment in a slice for the terminal, based on at least one of the identifier (GPSI or MSISDN), the S-NSSAI, or the policy. The terminal may be identified based on an identifier (GPSI or MSISDN). The slice may be identified based on the S-NSSAI. For example, the number of policy-specific PDU sessions allowed to the terminal in the network slice may vary. That is, based on the number of PDU sessions allowed in the network slice, the service provider may determine whether or not to allow further establishment of PDU sessions.

In operation 613, the SMCF may receive a Slice access control_PduSession response message from the service provider. According to an embodiment, the Slice access control_PduSession response message may include at least one of the GPSI, the MSISDN, the S-NSSAI, or authorization result information. The authorization result information may be a result about whether or not to allow the session establishment in the slice for the terminal determined by the service provider. According to an embodiment, the SMCF may identify the SUPI based on the GPSI (or MSISDN).

In operation 615, the SMCF may transmit an Nsmcf_slice access control_PduSession response message to the SMF. According to an embodiment, the Nsmcf_slice access control_PduSession response message may include at least one of the SUPI, the DNN, the S-NSSAI, or the authorization result information. According to an embodiment, the SMF may identify whether or not to perform a PDU session establishment procedure, based on the authorization result information.

In operation 617, the SMF may transmit an Nsmf_PDUSessionSMContext _Create Response message to the AMF. According to an embodiment, the Nsmf_PDUSessionSMContext Create Response message may include at least one of the S-NSSAI, the DNN, the SUPI, or the authorization result information.

In operation 619, the AMF may transmit a PDU session establishment response message to the terminal. According to an embodiment, the PDU session establishment response message may include at least one of the S-NSSAI, the DNN, SUPI, or the authorization result information.

Referring to the above description, a control policy at a session level may be applied to a network to which SMCF is applied. That is, when estimate a PDU session after the terminal registration procedure, the SMCF may determine whether to allow the PDU session establishment by interlocking a network function (e.g., SMF) of the 5GC with a service provider of the external network.

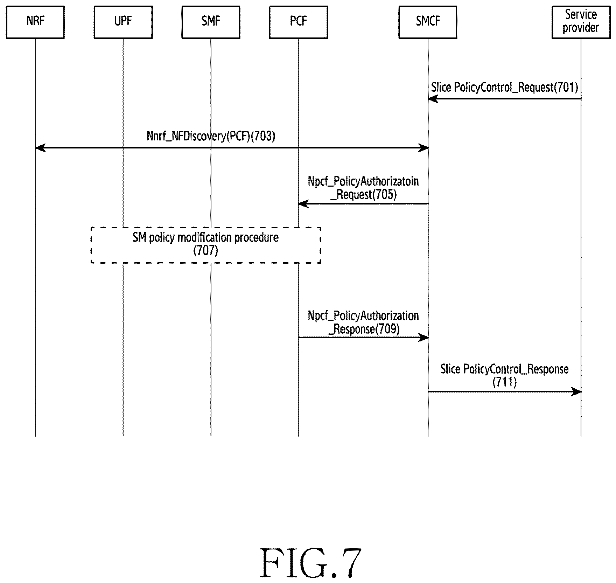

FIG. 7 illustrates a procedure for controlling a network slice policy according to an embodiment of the disclosure. A process in which an SCMF performs policy control by interlocking network functions (NFs) of a 5th generation core (5GC) network and a server of a service provider in a network to which a slice management and control function (SMCF) is applied will be described with reference to FIG. 7.

Referring to FIG. 7, in operation 701, the SMCF may receive a Slice PolicyControl_Request message from a service provider. According to an embodiment, the service provider may trigger a procedure for producing or updating a policy. The service provider may transmit a Slice PolicyControl _Request message to the SMCF in order to trigger the process of producing or updating a policy. The service provider may produce or update a policy for a specific terminal. In addition, the service provider may produce or update policies for all terminals using the service. The Slice PolicyControl _Request message may include at least one of a GPSI, an MSISDN, a wildcarded identity, S-NSSAI, an application ID, or policy parameters. The wildcard IDs may be used to identify terminals belonging to a network slice supporting access to a service. To this end, the SMCF may manage mapping information between external IDs (e.g., GPSIs or MSISDNs) and SUPIs in units of network slices. The terminal may identify the SUPI corresponding to the GPSI, based on stored mapping information. In addition, the terminal may identify the SUPI, based on the wildcard ID.

In operation 703, the SMCF may perform policy control by interworking with the PCF.

In operation 705, the SMCF may transmit an Npcf_PolicyAuthorization_Request message to the PCF. According to an embodiment, the Npcf_PolicyAuthorization _Request message may include at least one of the SUPI, the S-NSSAI, the application ID, or the policy parameters.

In operation 707, network functions (NFs) may perform a procedure for modifying a slice management policy.

In operation 709, the SMCF may receive an Npcf_PolicyAuthorization_Response message from the PCF. According to an embodiment, the Npcf_PolicyAuthorization_Response message may include at least one of the SUPI, the S-NSSAI, the application ID, or a result of modifying the slice management policy. The SMCF may identify the GPSI corresponding to the SUPI, based on the mapping information.

In operation 711, the SMCF may transmit a Slice Policy Control_Response message to the service provider. According to an embodiment, the Slice PolicyControl_Response message may include at least one of the GPSI, the MSISDN, the S-NSSAI, or the result of modifying the slice management policy.

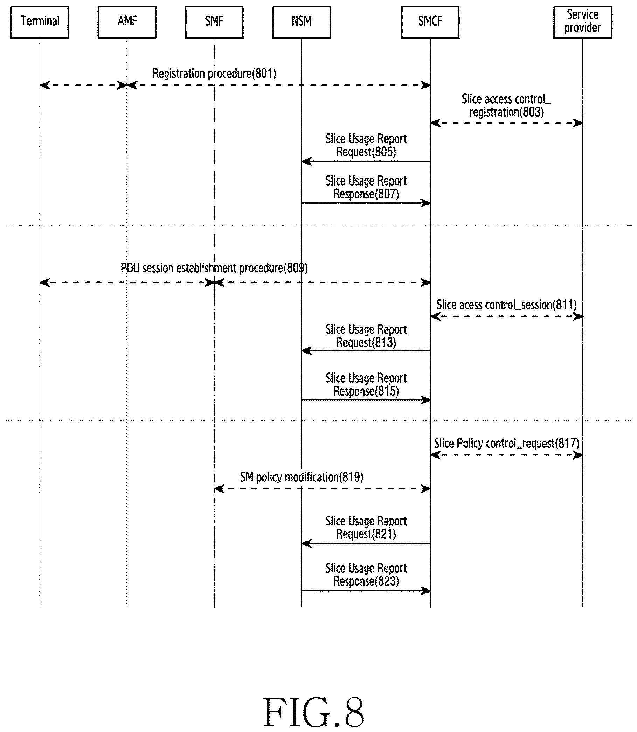

FIG. 8 illustrates a procedure for monitoring network slice usage according to an embodiment of the disclosure. A process in which a slice management and control function (SMCF) monitors slice usage by interlocking network functions (NFs) and a server of a service provider in a network to which the SMCF is applied will be described with reference to FIG. 8.

Referring to FIG. 8, in operations 801 and 803, operations according to FIG. 5 may be performed. According to an embodiment, the SMCF may update the number of terminals connected to the network slice if the terminal is allowed to access the network slice.

In operation 805, the SMCF may transmit a Slice Usage Report Request message to the NSM. According to an embodiment, the Slice Usage Report Request message may include at least one of the number of terminals connected to the network slice, an application ID, or S-NSSAI.

In operation 807, the SMCF may receive a Slice Usage Report Response message from the NSM.

In operations 809 and 811, operations according to FIG. 6 may be performed. According to an embodiment, when protocol data unit (PDU) session establishment is allowed for the network slice, the SMCF may update the number of PDU sessions established in the network slice.

In operation 813, the SMCF may transmit a Slice Usage Report Request message to the NSM. According to an embodiment, the Slice Usage Report Request message may include at least one of the number of PDU sessions established in a network slice, the application ID, or the S-NSSAI.

In operation 815, the SMCF may receive a Slice Usage Report Response message from the NSM.

In operations 817 and 819, operations according to FIG. 7 may be performed. According to an embodiment, the SMCF may update a policy control result when policy control is performed for the network slice.

In operation 821, the SMCF may transmit a Slice Usage Report Request message to the NSM. According to an embodiment, the Slice Usage Report Request message may include at least one of the policy control result, the application ID, and the S-NSSAI.

In operation 823, the SMCF may receive a Slice Usage Report Response message from the NSM.

Referring to the above description, in a network to which the SMCF is applied, the number of terminals for a network slice, the number of PDU sessions, and the policy control result may be applied to network slice information and reported to a network slice manger (NSM). A network operator may provide related information to the service provider, based on network slice usage information identified through the NSM.

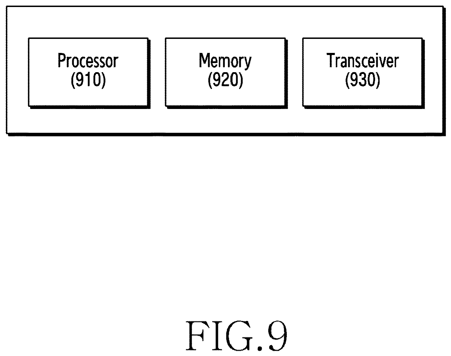

FIG. 9 illustrates a configuration of a network device according to various embodiments of the disclosure. Referring to FIG. 9, the network device may include a processor 910, a memory 920, and a transceiver 930. According to an embodiment, a slice management and control function (SMCF) may be implemented in the network device. According to an embodiment, an SMCF and one or more network functions (NFs) of a 5th establishment core (5GC) network may be implemented in the network device. For example, both an SMCF and a session management function (SMF) may be implemented in the network device. In the case where both the SMCF and the SMF are implemented in the network device, signaling between the SMCF and the SMF may be performed by an internal operation of the network device.

The processor 910 may control overall operations of the network device. For example, the processor 910 may transmit and receive signals through the transceiver 930. In addition, the processor 910 may perform protocol stack functions required by communication standards. To this end, the processor 910 may include at least one processor. The processor 910 may control the network device to perform operations according to the above-described embodiments.

The memory 920 may store basic programs for operating the network device, application programs, and data such as configuration information. The memory 920 may be comprised of volatile memory, non-volatile memory, or a combination of volatile and non-volatile memory. The memory 920 may provide stored data according to a request by the processor 910.

The transceiver 930 may perform functions for transmitting and receiving signals through a wired channel or a wireless channel. For example, the transceiver 930 may perform a conversion function between a baseband signal and a bit stream depending on the physical layer standard of the system. For example, when transmitting data, the transceiver 930 may encode and modulate a transmission bit stream to produce complex symbols. In addition, when receiving data, the transceiver 930 may restore the baseband signal to a reception bit stream through demodulation and decoding. In addition, the transceiver 930 may up-convert a baseband signal into a radio frequency (RF) band signal, transmit the signal through an antenna, and down-convert an RF band signal received through the antenna into a baseband signal. The transceiver 930 may convert a bit stream transmitted to another network device in the network into a physical signal and convert a physical signal received from another network device into a bit stream. To this end, the transceiver 930 may include at least one transceiver.

A method performed by a network device according to an embodiment of the disclosure described above may include receiving an access request message of a terminal to a network slice from an access and mobility management function (AMF), obtaining an external network identifier of the terminal from a unified data repository (UDR), receiving information about whether or not to allow the terminal to access the network slice from an external network server, based on the external network identifier of the terminal, and transmitting an access control response message to the AMF.

According to an embodiment, the access request message may include an identifier of the terminal and an identifier of the network slice, and the identifier of the terminal may correspond to the external network identifier of the terminal.

According to an embodiment, storing mapping information between the identifier of the terminal and the external network identifier of the terminal may be included.

According to an embodiment, the identifier of the terminal may correspond to a subscription permanent identifier (SUPI), the identifier of the network slice may correspond to single-network slice selection assistance information (S-NSSAI), and the external network identifier of the terminal may correspond to a generic public subscription identifier (GPSI) or a mobile station international subscriber directory number (MSISDN).

According to an embodiment, receiving a protocol data unit session (PDU session) establishment request message for the network slice from a session management function (SMF), identifying the external network identifier of the terminal, based on the mapping information, obtaining information about whether or not to allow the establishment of the PDU session for the network slice from the external network server, based on the external network identifier of the terminal, and transmitting a PDU session establishment response message to the SMF may be included.

According to an embodiment, receiving a policy control request message from the external network server, identifying one or more terminals to which the policy is applied based on the policy control request message, performing a policy control procedure for the one or more terminals, obtaining a policy control result from a policy control function (PCF), and transmitting the policy control result to the external network server may be included.

According to an embodiment, identifying the number of terminals connected to the network slice, based on the information about whether or not the access is allowed, and transmitting information about the number of terminals connected to the network slice to a network slice manager (NSM) may be included.

According to an embodiment, identifying the number of PDU sessions established in the network slice, based on the information about whether or not the establishment of the PDU sessions is allowed, and transmitting information about the number of PDU sessions established in the network slice to the network slice manager (NSM) may be included.

According to an embodiment, identifying a policy applied to the network slice, based on the policy control result, and transmitting information about the policy applied to the network slice to the network slice manager (NSM) may be included.

According to an embodiment, the network device may be a slice management and control function (SMCF).

A network device according to an embodiment of the disclosure described above may include at least one transceiver and at least one processor operatively connected to the at least one transceiver, wherein the at least one processor may be configured to receive an access request message of a terminal to a network slice from an access and mobility management function (AMF), obtain an external network identifier of the terminal from a unified data repository (UDR), receive information about whether or not to allow the terminal to access the network slice from an external network server, based on the external network identifier of the terminal, and transmit an access control response message to the AMF.

According to an embodiment, the access request message may include an identifier of the terminal and an identifier of the network slice, and the identifier of the terminal may correspond to the external network identifier of the terminal.

According to an embodiment, the at least one processor may be configured to store mapping information between the identifier of the terminal and the external network identifier of the terminal may be included.

According to an embodiment, the identifier of the terminal may correspond to a subscription permanent identifier (SUPI), the identifier of the network slice may correspond to single-network slice selection assistance information (S-NSSAI), and the external network identifier of the terminal may correspond to a generic public subscription identifier (GPSI) or a mobile station international subscriber directory number (MSISDN).

According to an embodiment, the at least one processor may be configured to receive a protocol data unit session (PDU session) establishment request message for the network slice from a session management function (SMF), identify the external network identifier of the terminal, based on the mapping information, obtain information about whether or not to allow the establishment of the PDU session for the network slice from the external network server, based on the external network identifier of the terminal, and transmit a PDU session establishment response message to the SMF.

According to an embodiment, the at least one processor may be configured to receive a policy control request message from the external network server, identify one or more terminals to which the policy is applied based on the policy control request message, perform a policy control procedure for the one or more terminals, obtain a policy control result from a policy control function (PCF), and transmit the policy control result to the external network server.

According to an embodiment, the at least one processor may be configured to identify the number of terminals connected to the network slice, based on the information about whether or not the access is allowed, and transmit information about the number of terminals connected to the network slice to a network slice manager (NSM).

According to an embodiment, the at least one processor may be configured to identify the number of PDU sessions established in the network slice, based on the information about whether or not the establishment of the PDU sessions is allowed, and transmit information about the number of PDU sessions established in the network slice to the network slice manager (NSM).

According to an embodiment, the at least one processor may be configured to identify a policy applied to the network slice, based on the policy control result, and transmit information about the policy applied to the network slice to the network slice manager (NSM).

According to an embodiment, the network device may be a slice management and control function (SMCF).

The methods according to embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Furthermore, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Furthermore, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure.

## Claims

1. A method performed by a network device in a communication system, the method comprising:
receiving information about a network slice from a network slice manager (NSM);
receiving a registration request message of a terminal for the network slice from an access and mobility management function (AMF);
determining whether or not to allow access of the terminal, based on the information about the network slice;
obtaining an external network identifier of the terminal from a unified data repository (UDR) in case that the access of the terminal is determined to be allowed;
receiving information about whether or not the terminal is allowed to be registered in the network slice from an external network server, based on the external network identifier of the terminal; and
transmitting a registration response message to the AMF.

2. The method of claim 1, wherein the information about the network slice comprises at least one of an identifier of the network slice, the number of terminals allowed in the network slice, the number of protocol data unit (PDU) sessions allowed in the network slice, or the number of terminal-specific allowed PDU sessions,
wherein the registration request message comprises an identifier of the terminal and an identifier of the network slice, and
wherein the identifier of the terminal corresponds to the external network identifier of the terminal.

3. The method of claim 2, wherein in case that the number of terminals connected to the network slice is less than the number of terminals allowed in the network slice, the access of the terminal is determined to be allowed.

4. The method of claim 2, comprising storing mapping information between the identifier of the terminal and the external network identifier of the terminal.

5. The method of claim 2, comprising, in case that the identifier of the terminal is a subscription permanent identifier (SUPI), identifying that the external network identifier of the terminal is required.

6. The method of claim 1, comprising:
identifying the number of terminals connected to the network slice, based on the information about whether or not the registration is allowed; and
transmitting information about the number of terminals connected to the network slice to the NSM.

7. The method of claim 4, comprising:
receiving a PDU session establishment request message for the network slice from a session management function (SMF);
determining whether or not to allow establishment of a PDU session, based on at least one of the number of PDU sessions allowed in the network slice or the number of terminal-specific allowed PDU sessions;
identifying the external network identifier of the terminal, based on the mapping information, in case that the establishment of the PDU session is determined to be allowed;
obtaining information about whether or not to allow the establishment of the PDU session for the network slice from the external network server, based on the external network identifier; and
transmitting a PDU session establishment response message to the SMF.

8. The method of claim 7, comprising:
identifying the number of PDU sessions established in the network slice, based on the information about whether or not the establishment of the PDU sessions is allowed; and
transmitting information about the number of PDU sessions established in the network slice to the NSM.

9. The method of claim 1, comprising:
receiving a policy control request message from the external network server;
identifying one or more terminals to which the policy is applied based on the policy control request message;
performing a policy control procedure for the one or more terminals;
obtaining a policy control result from a policy control function (PCF); and
transmitting the policy control result to the external network server.

10. The method of claim 9, comprising:
identifying a policy applied to the network slice, based on the policy control result; and
transmitting information about the policy applied to the network slice to the NSM.

11. A network device comprising:
at least one transceiver; and
at least one processor operatively connected to the at least one transceiver,
wherein the at least one processor is configured to:
receive information about a network slice from a network slice manager (NSM);
receive a registration request message of a terminal for the network slice from an access and mobility management function (AMF);
determine whether or not to allow access of the terminal, based on the information about the network slice;
obtain an external network identifier of the terminal from a unified data repository (UDR) in case that the access of the terminal is determined to be allowed;
receive information about whether or not the terminal is allowed to be registered in the network slice from an external network server, based on the external network identifier of the terminal; and
transmit a registration response message to the AMF.

12. The network device of claim 11, wherein the information about the network slice comprises at least one of an identifier of the network slice, the number of terminals allowed in the network slice, the number of protocol data unit (PDU) sessions allowed in the network slice, or the number of terminal-specific allowed PDU sessions,
wherein the registration request message comprises an identifier of the terminal and an identifier of the network slice, and
wherein the identifier of the terminal corresponds to the external network identifier of the terminal.

13. The network device of claim 12, wherein the at least one processor is configured to determine to allow the access of the terminal in case that the number of terminals connected to the network slice is less than the number of terminals allowed in the network slice.

14. The network device of claim 12, wherein the at least one processor is configured to store mapping information between the identifier of the terminal and the external network identifier of the terminal.

15. The network device of claim 12, wherein the at least one processor is configured to identify the external network identifier of the terminal is required in case that the identifier of the terminal is a subscription permanent identifier (SUPI).
